# FASCICULE DE BREVET EUROPEEN

(11) **EP 2 467 524 B1**
(45) Date de publication et mention de la délivrance du brevet: **25.11.2015**
(21) Numéro de dépôt: 10754570.9
(22) Date de dépôt: 11.08.2010
(51) Int. Cl.: B29B 11/16, D04H 1/541, D04H 3/004, D04H 3/105, D04H 3/147, D04H 5/02, D04H 5/06, D04H 5/12, B32B 5/26, B32B 17/02, B32B 17/06, D04H 13/00

(54) **ARMATURE TEXTILE A FILS DE VERRE CONTINUS**
TEXTIL BEWEHRUNG KONTINUIERLICHER GLAS FILAMENTE
TEXTILE ARMATURE OF CONTINUOUS GLASS FILAMENTS

(30) Priorité: 21.08.2009 FR 0904029
(43) Date de publication de la demande: 27.06.2012
(73) Titulaire: Chomarat, Gilbert, 1223 Cologny (CH)
(72) Inventeur: Chomarat, Gilbert, 1223 Cologny (CH)
(74) Mandataire: Poncet, Jean-François
(86) Numéro de dépôt international: PCT/IB2010/053635
(87) Numéro de publication internationale: WO 2011/021133

(56) Documents cités:
- EP-A2- 0 273 145
- WO-A1-98/35086
- WO-A1-03/038175
- WO-A1-2008/139423

## Description

### DOMAINE TECHNIQUE DE L'INVENTION

La présente invention concerne les armatures textiles cohérentes et souples utilisées comme produit de renforcement d'articles composites, c'est-à-dire d'articles à base de résine (polyester ou autres) armée de fibres de renforcement.

On connaît déjà de nombreuses structures d'armature textile cohérente de renforcement constituées d'une ou plusieurs couches de fibres liées entre elles. L'armature textile se présente généralement sous forme d'une nappe souple conditionnée en bobine, que l'on peut ainsi transporter et manipuler sur le lieu d'utilisation pour la réalisation d'un article composite.

Pour la réalisation d'un article composite, on procède généralement de la façon suivante : on découpe une pièce de surface appropriée d'armature textile, on la place dans un moule, et l'on fait pénétrer une résine qui vient noyer l'armature dans le moule. Après polymérisation, la résine et l'armature forment une structure mécaniquement résistante.

Les propriétés de résistance mécanique sont obtenues à condition que la résine pénètre parfaitement entre les fibres formant l'armature, sans laisser de zones dépourvues de résine, et en adhérant parfaitement aux fibres. Il faut en outre que les fibres occupent un volume suffisant, et occupent de façon régulière le volume de l'article composite à réaliser, notamment en suivant les formes de l'article lorsque celui-ci n'est pas plan.

Il faut enfin que les fibres présentent en elle-même une résistance mécanique satisfaisante pour réaliser une armature efficace.

Diverses structures d'armatures textiles de renforcement ont déjà été proposées.

Ainsi, le document EP 0 395 548 décrit l'utilisation de deux couches de renfort textile, par exemple en fibres de verre, disposées de part et d'autre d'une couche centrale constituée par une nappe à base de fibres synthétiques à ondulation permanente, par exemple des fibres de polyester de 40 à 70 mm de long qui ont reçu un traitement de texturation. Les couches de renfort textile sont liées à la couche centrale par couture/tricotage.

Le document EP 0 694 643 décrit l'utilisation de deux couches de renfort textile disposées de part et d'autre d'une couche centrale donnant l'épaisseur dudit matériau, les couches étant liées entre elles par couture/tricotage, et on prévoit contre l'une des faces externes un voile de fibres synthétiques collé ou cousu.

Les techniques de couture/tricotage sont relativement lentes, et les armatures textiles ainsi réalisées présentent des capacités de déformation non uniformes, et des défauts d'aspect en surface.

Pour augmenter les cadences de production et réduire des défauts résultant du tricotage, on a récemment proposé, dans le document WO 2008/139423 A1, de réaliser une armature textile à base de fibres, comprenant une couche intérieure épaisse et aérée à base de tronçons de fibres synthétiques de 90 mm ayant reçu un traitement leur communiquant une frisure permanente, et des couches externes disposées de part et d'autre de la couche intérieure et comprenant des tronçons de fibres à surface thermofusible, certains au moins des tronçons de fibre à surface thermofusible pénétrant selon une partie de leur longueur dans la couche intérieure et adhérant partiellement entre eux et aux fibres synthétiques de la couche intérieure.

L'intérêt de cette structure est de conférer aux renforts textiles une grande souplesse et une grande capacité de déformation pour suivre les formes de moules complexes, les fibres synthétiques frisées assurant le maintien d'un volume suffisant de la couche intérieure pour une bonne pénétration de la résine lors du moulage ultérieur.

Il est possible d'introduire des fibres de verre coupées de 50 mm dans les couches externes. Pour certaines applications, il reste toutefois souhaitable d'augmenter encore les caractéristiques mécaniques de l'article composite, notamment sa résistance à la rupture ou à la flexion.

Selon une autre technique connue, décrite dans le document WO 98/42495 A1, on réalise un produit de renforcement de moulage à l'aide de fils de verre continus liés par un liant polymérisé.

De tels produits de renforcement à fils de verre continus peuvent être utilisés pour réaliser des produits composites par moulage par injection.

On appelle fil un ensemble de filaments unitaires de verre, qui ont généralement un diamètre de 5 µm à 24 µm. Un fil comprend généralement de l'ordre de 40 filaments. On appelle mèche un ensemble de fils. Une mèche comprend généralement 50 fils environ.

Pour permettre l'injection, il est souhaitable d'utiliser un produit de renforcement suffisamment aéré, et en particulier présentant ou conservant suffisamment de gonflant pour un poids de fil donné.

Le document WO 98/42495 A1 enseigne un produit de renforcement formé de couches de fils continus issus d'une bobine ou « roving ». Le roving est un enroulement d'une mèche formée de fils de base plus ou moins recollés autour de l'axe de la bobine. Selon ce document, les fils issus du roving sont éclatés par des jets d'air ou des rouleaux de pincement, puis déposés de façon aléatoire sous forme d'une nappe sur un support, simultanément à une projection de liant liquide polymérisable.

L'inconvénient de cette technique reste la présence nécessaire d'un liant pour assurer la cohésion du produit de renforcement lors de ses manipulations avant moulage par injection. Il en résulte que la quantité de fibres de verre reste relativement faible, et le liant est susceptible de réduire la capacité de pénétration de la résine lors du moulage par injection.

En outre, cette technique connue est conçue pour la réalisation d'une plaque de dimensions finies, et n'est pas adaptée par exemple à une production en continu d'éléments que l'on peut aisément découper selon des contours choisis.

### EXPOSE DE L'INVENTION

Le problème proposé par la présente invention est d'augmenter sensiblement la résistance mécanique des articles composites réalisés à partir de renforts de moulage à base de fibres, tout en conservant les propriétés de cohérence, de souplesse et de déformabilité des renforts de moulage avant moulage, et en conservant un volume satisfaisant des renforts de moulage et de bonnes propriétés de pénétration et d'impression de la résine lors du moulage.

En complément, l'invention propose d'améliorer si nécessaire la régularité de la surface des articles composites réalisés par moulage des renforts de moulage.

De préférence, l'invention vise également à permettre la réalisation de produits de renforcement en bande continue, pouvant être conditionnée en bobine, et pouvant être découpée ou tronçonnée sans risque d'effilochage ou de dégradation des bords.

Pour atteindre ces buts ainsi que d'autres, l'invention propose un renfort de moulage en nappe à base de fibres, comprenant :
- une couche intérieure épaisse et aérée à base de fibres,
- des couches externes disposées de part et d'autre de la couche intérieure,
- les couches externes comprenant des tronçons de fibres à surface thermofusible,
- certains au moins des tronçons de fibres à surface thermofusible pénétrant selon une partie de leur longueur dans la couche intérieure et adhérant partiellement entre eux et aux fibres de la couche intérieure,
- et dans laquelle la couche intérieure comprend des fibres de type fils de verre continus se développant en orientations aléatoires et en plusieurs épaisseurs.

Le caractère continu des fils de verre, disposés en orientation aléatoire et en plusieurs épaisseurs, met à profit leur élasticité pour conférer à la couche intérieure un caractère suffisamment épais et aéré qui favorise la pénétration de la résine lors du moulage. Les fils de verre continus de la couche intérieure permettent aussi d'augmenter sensiblement les propriétés mécaniques des articles composites réalisés par moulage d'un tel renfort. Les couches externes, dont certains tronçons de fibres pénètrent et adhèrent aux fibres de la couche intérieure, assurent un maintien provisoire suffisant des fils de verre continus de la couche intérieure après fabrication et avant utilisation du renfort de moulage.

Simultanément, les couches externes à fibres pénétrantes et adhérentes permettent d'assurer le maintien des fils de verre continus avec seulement une faible quantité de matière autre que le verre, c'est-à-dire en maximisant la quantité relative de verre dans le renfort de moulage.

Les couches externes peuvent être particulièrement minces, sous forme de voile de fibres, par exemple selon un grammage de 25 à 30 g/m² environ.

Pour bénéficier de l'effet élastique des fils de verre de la couche intérieure, il est important que ceux-ci forment des boucles et des entrelacements, de sorte que la plupart des fils de verre soient chacun en appui contre d'autres fils d'une épaisseur adjacente selon plusieurs tronçons de leur longueur, les tronçons intermédiaires entre ces appuis restant libres et élastiquement flexibles, conférant à la couche intérieure une capacité de compression élastique. Cet effet peut naturellement être obtenu avec des fils de grande longueur, par exemple de plus de un mètre. Mais on a pu constater que cet effet est encore obtenu de façon surprenante avec des fils tronçonnés selon des longueurs plus courtes, par exemples comprises entre 20 et 40 cm environ.

Dans la description et les revendications, on considère donc que les fils de verre sont « continus » lorsque leur longueur est supérieure à 20 cm environ.

Selon un premier mode de réalisation, les fils de verre continus sont des tronçons de fils ayant une longueur supérieure à 20 cm environ.

L'avantage de fils de 20 à 40 cm est une plus grande facilité de mise en oeuvre lors de l'étape de dépose sur un voile de fibres synthétiques : la dépose de fils de verre continus de grande longueur enroulés en bobine sur un support en défilement continu nécessite, pour éviter une torsion des fils, de faire tourner la bobine perpendiculairement à son axe, et de stopper le défilement à chaque fin de bobine ; par contre, la dépose de tronçons de fils de verre sur le support en défilement est aisée et peut être entièrement ininterrompue.

Les tronçons de fils de verre, déposés en orientations aléatoires, doivent être en quantité suffisante pour former plusieurs épaisseurs de fils et constituer ainsi un maillage continu selon la surface de la nappe ou renfort de moulage.

Un tel maillage continu favorise aussi l'obtention d'une grande résistance mécanique des articles composites que l'on réalise ensuite par moulage du renfort de moulage. On a pu estimer que, à conditions égales, la résistance mécanique conférée par un renfort de moulage à fils de verre de 20 cm de long selon l'invention est 20 % supérieure à la résistance mécanique conférée par un renfort de moulage à fils de verre de 5 cm de long.

Selon un autre mode de réalisation, les fils de verre continus sont sous forme d'au moins une mèche éclatée de fils de verre continus de grande longueur. La mèche est issue d'une bobine ou « roving ».

Cette disposition en mèches éclatées favorise également l'effet élastique pour conférer à la couche intérieure une épaisseur satisfaisante et un caractère aéré pour la pénétration de la résine.

La mèche de fils de verre continus peut avantageusement avoir un titre compris entre 2 400 et 4 800 tex environ.

Les fils de verre continus peuvent avantageusement être formés d'un assemblage de filaments ayant un diamètre unitaire compris entre environ 14 µm et environ 17 µm.

En alternative ou en complément, les fils de verre continus peuvent avoir un titre unitaire de 40 à 80 tex environ.

Pour améliorer la régularité de la surface des articles composites réalisés par surmoulage d'un renfort de moulage selon l'invention, on peut avantageusement prévoir, entre la couche intérieure et l'une au moins des couches externes, une couche intermédiaire à base de fibres de verre coupées.

Selon un mode de réalisation avantageux, le renfort de moulage selon l'invention présente un grammage compris entre 400 et 1 800 g/m². On réalise ainsi un bon compromis entre l'épaisseur du renfort du moulage et sa capacité de déformation avant moulage.

Selon un autre aspect, l'invention propose un procédé de fabrication d'un tel renfort de moulage, comprenant les étapes de :
a) prévoir un premier voile de fibres chimiques à surface thermofusible,
b) sur le premier voile de fibres chimiques à surface thermofusible, déposer des fils de verre continus, en leur donnant toutes orientations aléatoires et en plusieurs épaisseurs, pour former une couche intérieure de fils de verre continus,
c) déposer, sur la couche de fils de verre continus, un second voile de fibres chimiques à surface thermofusible,
d) effectuer un aiguilletage léger double face pour faire pénétrer des tronçons de fibres à surface thermofusible de chacun des voiles dans la couche intérieure,
e) chauffer l'ensemble à une température suffisante pour ramollir et rendre collantes les fibres à surface thermofusible,
f) calandrer à froid l'ensemble.

Selon une première possibilité, au cours de l'étape b), on dépose les fils de verre continus sous forme d'une ou plusieurs mèches éclatées de fils de verre continus de grande longueur.

De préférence, au cours de l'étape b), on dépose les fils de verre continus sous forme de tronçons de fils de verre dont la longueur est supérieure à 20 cm environ.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique en coupe longitudinale d'un renfort de moulage selon un premier mode de réalisation de l'invention ;
- la figure 2 est une vue schématique en perspective d'une mèche de fils de verre continus en cours d'éclatement ;
- la figure 3 illustre en perspective un fil de verre continu ;
- la figure 4 est une vue schématique en coupe longitudinale du renfort de moulage de la figure 1, en cours de fabrication ; et
- la figure 5 est une vue schématique en coupe longitudinale d'un renfort de moulage selon un second mode de réalisation de l'invention.

### DESCRIPTION DES MODES DE REALISATION PREFERES

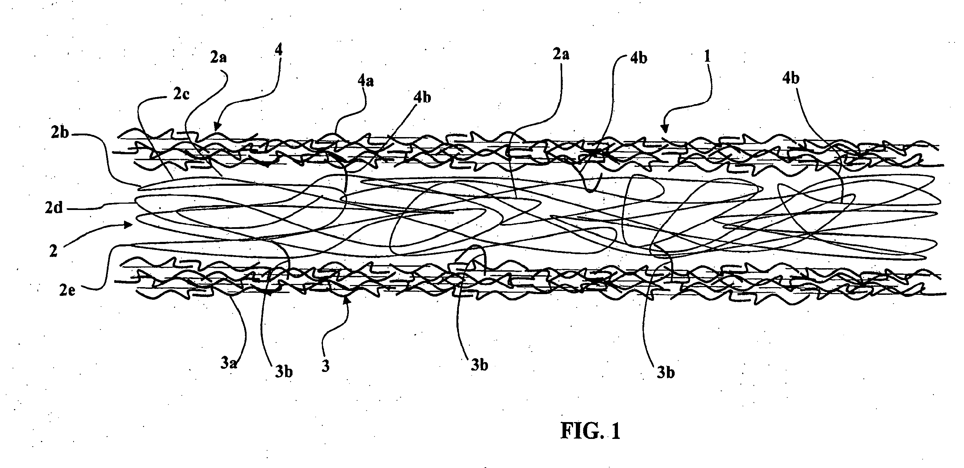

Dans un premier mode de réalisation illustré sur la figure 1, un renfort de moulage 1 selon l'invention comporte trois couches de fibres, à savoir une couche intérieure 2 et deux couches externes 3 et 4 disposées de part et d'autre de la couche intérieure 2.

La couche intérieure 2 comprend des fils de verre continus 2a qui se développent en orientation aléatoire et en plusieurs épaisseurs. Cela signifie que le fil de verre continu 2a prend, dans la couche intérieure 2, successivement toutes les orientations possibles dans le plan général de la couche intérieure 2, en formant des boucles. Le fil de verre continu 2a prend également appui sur des fils de verre continus voisins de la couché intérieure 2, par exemple au niveau de plusieurs tronçons de sa longueur. Du fait de la présence de boucles, telles que par exemple, sur la figure 1, les boucles 2c, 2d et 2e, les appuis se développent en plusieurs directions. Les tronçons intermédiaires de fils de verre continus, entre les appuis, restent élastiquement flexibles, et confèrent à la couche intérieure 2 une structure aérée et une capacité de compression élastique.

Les couches externes 3 et 4 comprennent chacune des tronçons de fibres 3a ou 4a à surface thermofusible.

Les tronçons de fibres 3a et 4a à surface thermofusible peuvent être en toute matière ayant une température de fusion suffisamment basse et de bonnes propriétés de collage avec les fils de verre continus 2a de la couche intérieure 2.

En alternative, les tronçons 3a et 4a de fibres à surface thermofusible peuvent être des fibres chimiques bi-composant, comportant une âme centrale en polyamide, polyester ou polypropylène, et une gaine externe en copolyester, en polyéthylène ou en toute autre matière ayant une température de fusion inférieure à celle de l'âme centrale. De bons résultats pourront être obtenus en utilisant une âme centrale en polyester et une gaine externe en copolyester, ou une âme centrale en polypropylène et une gaine externe en polyéthylène. D'autres couples de matières peuvent être utilisés sous forme de fibres bi-composant coaxiales : le polypropylène et le copolypropylène, le polypropylène et l'acétate d'éthyle vinyle.

Par le fait que l'âme centrale de la fibre bi-composant a une température de fusion plus élevée que la gaine externe, on évite un risque accidentel de fusion complète des tronçons de fibres 3a et 4a à surface thermofusible lors de la fabrication du renfort de moulage 1.

On limite aussi efficacement le risque, lors d'une étape d'échauffement pour la fabrication du renfort de moulage 1, que les tronçons de fibres 3a et 4a thermofusibles soient, par un échauffement trop élevé ou mal contrôlé, complètement fondus, formant des couches uniformes ou imperméables à la résine par étalement de leur matière constitutive sur les faces supérieure et inférieure de la couche intérieure 2. L'âme des fibres bi-composant n'est pas (ou très peu) altérée, et les couches externes 3 et 4 sont ainsi conservées.

En outre, l'utilisation de fibres à surface thermofusible bi-composant à gaine externe et âme centrale permet de réduire la teneur en polyoléfine du renfort de moulage 1. Cela s'avère avantageux, la résine étant peu compatible avec les polyoléfines.

Parmi les tronçons 3a et 4a de fibres à surface thermofusible des couches externes 3 et 4, certains au moins de ces tronçons, par exemple les tronçons pénétrants 3b et 4b sur la figure 1, pénètrent selon une partie de leur longueur dans la couche intérieure 2 et adhèrent partiellement entre eux et aux fils de verre continus 2a de la couche intérieure 2.

Les tronçons pénétrants 3b et 4b de fibres sont répartis régulièrement selon la surface du renfort de moulage 1, et assurent une cohésion de l'ensemble, tout en conservant les propriétés de déformabilité et de souplesse du renfort de moulage 1. La densité surfacique de tronçons pénétrants peut par exemple être de 5 à 10 tronçons par cm² de surface du renfort de moulage 1.

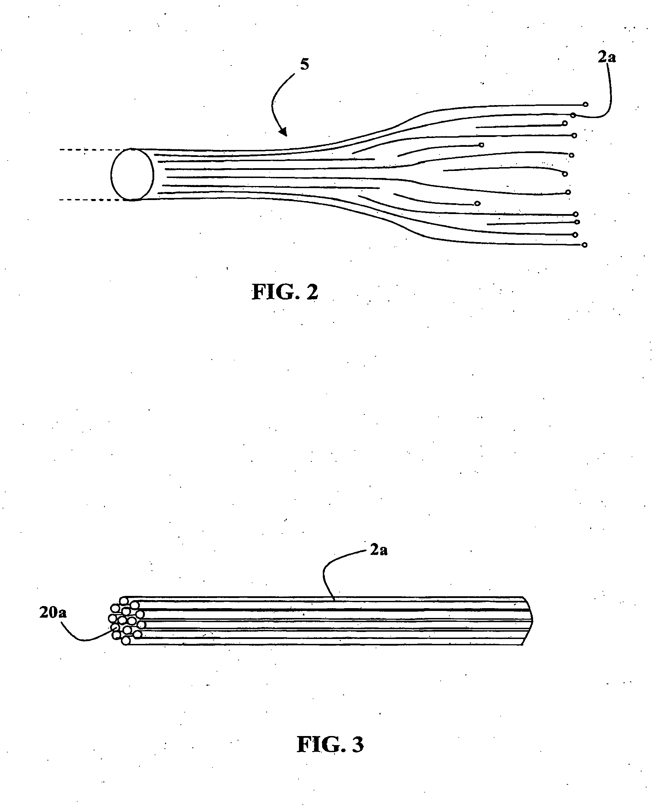

En pratique, selon un premier mode de réalisation, dans la couche intérieure 2, les fils de verre continus 2a peuvent avantageusement être répartis en au moins une mèche éclatée de fils de verre continus de grande longueur. A titre d'illustration, la figure 2 représente une telle mèche 5 ou faisceau de fils généralement parallèles les uns aux autres. Initialement, dans la mèche, les fils de verre continus 2a sont au contact les uns des autres. Lors de l'éclatement de la mèche 5, les fils s'écartent les uns des autres, tout en restant dans des directions sensiblement parallèles ou peu divergentes.

En alternative, on pourra préférer constituer la couche intérieure 2 à partir d'un enchevêtrement de tronçons de fils de verre dont la longueur est d'au moins 20 cm environ. Du fait de leur enchevêtrement et de leurs orientations aléatoires, les fils de verre continus forment un maillage continu selon la surface du renfort de moulage 1.

On choisira avantageusement des fils de verre continus 2a (figure 3), formés d'un assemblage de filaments 20a dont le diamètre unitaire est compris entre environ 14 µm et environ 17 µm. Le titre unitaire des fils de verre continus peut par exemple être compris entre 40 et 80 Tex, par assemblage d'environ 50 filaments.

Les fils de verre continus 2a sont en réalité formés d'un nombre suffisant de filaments pour éviter leur rupture lors des manipulations et utilisations selon l'invention, étant observé que les filaments isolés, dans la taille dans laquelle ils sortent habituellement des filières de fabrication, sont trop fragiles pour de telles manipulations et utilisations.

Le renfort de moulage 1 selon l'invention peut être réalisé sous forme de bande continue que l'on conditionne en bobine de grande longueur.

Par exemple, on réalise un premier voile de fibres à surface thermofusible destiné à constituer la couche externe 3, on dépose en continu sur ce premier voile 3 des tronçons de fils de verre continus 2a ou une ou plusieurs mèches éclatées de fils de verre continus 2a, en leur donnant une orientation aléatoire pour réaliser une couche intérieure 2 à plusieurs épaisseurs.

L'opération de dépose en continu des mèches de fils de verre continus 2a peut être réalisée comme décrit dans le document WO 98/42495 A1, à la différence que le dépôt des fibres se fait alors sur le premier voile lui-même en déplacement sur un convoyeur continu.

L'opération de dépose en continu de tronçons de fils de verre continus 2a peut être réalisée de façon habituellement connue pour des tronçons de fils, par chute aléatoire en sortie d'un poste de sectionnement.

On superpose sur cette couche intérieure 2 de fils de verre continus 2a ainsi réalisée un second voile de fibres à surface thermofusible destiné à constituer la seconde couche externe 4.

On soumet l'ensemble ainsi obtenu à un aiguilletage léger double face qui fait pénétrer certains au moins (3b, 4b) des tronçons de fibres 3a et 4a à surface thermofusible dans chacun des voiles dans la couche intérieure 2, on chauffe l'ensemble à une température suffisante pour ramollir la partie thermofusible des fibres à surface thermofusible 3b, 4b et pour assurer leur collage aux fils de verre continus 2a de la couche intérieure 2.

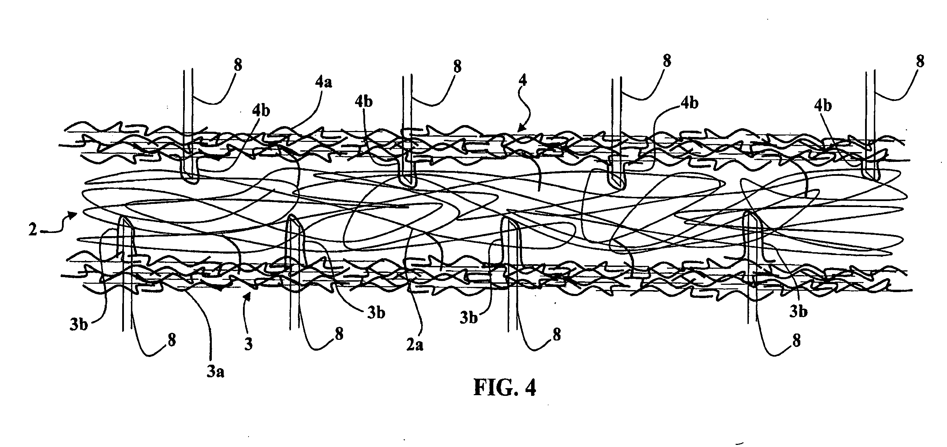

La figure 4 illustre schématiquement l'opération d'aiguilletage léger, dans laquelle on distingue des aiguilles 8 de pré-aiguilletage, qui entraînent des tronçons pénétrants 3b et 4b de fibres pour qu'ils pénètrent dans la couche intérieure 2.

L'aiguilletage léger effectué réalise par exemple une densité de perforations d'environ 5 à 10 perforations au cm². Cela doit être comparé aux procédés d'aiguilletage qui réalisent, de façon classique, des densités au moins dix fois supérieures. L'aiguilletage léger permet un grand débit lors de la fabrication du renfort de moulage selon l'invention.

L'aiguilletage léger effectué est suffisant pour assurer la cohésion pendant le transfert de l'ébauche de renfort de moulage jusqu'à un poste de travail suivant, mais il est insuffisant pour assurer la cohésion définitive du renfort de moulage 1 et celui-ci n'est toujours pas transportable en sortie de l'aiguilleteuse pour un usage comme produit de renfort.

L'échauffement qui est réalisé après l'opération d'aiguilletage léger permet de ramollir la couche superficielle thermofusible des tronçons pénétrants 3b, 4b de fibres des couches externes 3 et 4 pour les rendre adhérentes. Les tronçons pénétrants 3b, 4b de fibres qui ont été entraînés par les aiguilles 8 d'aiguilletage léger adhèrent aux fils de verre continus 2a de la couche intérieure 2. Après refroidissement, les différentes couches 2, 3 et 4 du renfort de moulage 1 sont ainsi liées entre elles par les tronçons pénétrants 3b, 4b de fibres aiguilletés et collés. Le renfort de moulage 1 est alors cohérent et transportable. Le chauffage est réglé pour ramollir et rendre adhésifs les tronçons de fibres 3a, 4a à surface thermofusible, mais sans les fondre.

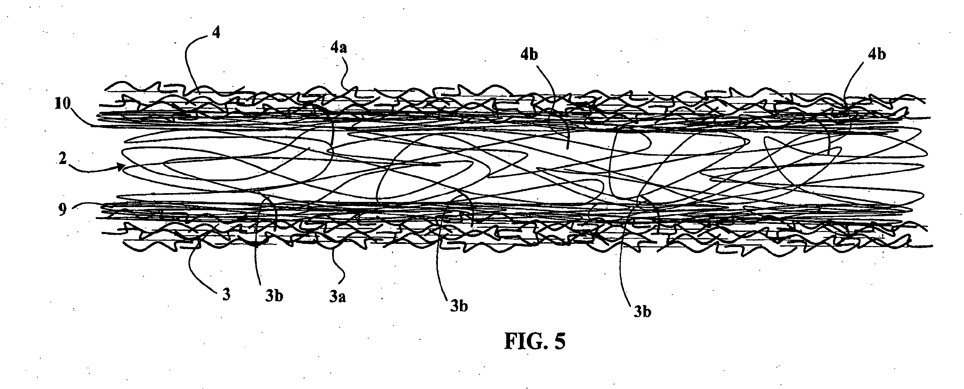

On considère maintenant la figure 5, qui illustre schématiquement un second mode de réalisation du renfort de moulage selon l'invention.

Ce second mode de réalisation se distingue du premier mode de réalisation de la figure 1 par la présence supplémentaire de deux couches intermédiaires 9 et 10 entre la couche intérieure 2 et les couches externes 3 et 4 respectives. Chaque couche intermédiaire 9 ou 10 est à base de fibres de verre coupées, réparties en orientations aléatoires généralement parallèles au plan moyen du renfort.

Ces couches intermédiaires 9 et 10 ont à la fois un effet de renforcement mécanique, et un effet de lissage de la surface de la couche intérieure 2. On réalise ainsi un renfort de moulage dont la surface est plus lisse, permettant d'obtenir un bon aspect de surface des articles composites réalisés par moulage du renfort de moulage.

On retrouve les tronçons pénétrants 3b, 4b de fibres, qui solidarisent les couches 2, 3, 4, 9 et 10.

### Exemple 1

I) sur une carde conventionnelle, on réalise un premier voile de fibres chimiques à surface thermofusible. Les tronçons de fibres chimiques sont en fibres bi-composant, avec une âme centrale en polyester et une gaine externe thermofusible en copolyester. La gaine externe thermofusible en copolyester a une température de fusion d'environ 110°C.
   Les fibres chimiques bi-composant ont un titre unitaire compris entre 2 deniers environ et 4 deniers environ.
II) sur une carde conventionnelle, on réalise un second voile de fibres chimiques à surface thermofusible, similaire au premier voile.
III) sur le premier voile de fibres à surface thermofusible, on dépose une ou plusieurs mèches éclatées de fils de verre continus, en leur donnant toutes orientations aléatoires et en plusieurs épaisseurs. Les fils de verre continus sont formés d'un assemblage de 40 filaments ayant un diamètre unitaire d'environ 15 µm, les fils ayant un titre unitaire d'environ 50 tex.
IV) on dépose le second voile sur la face opposée de la couche intérieure 2.
V) l'ébauche de renfort de moulage ainsi réalisée est introduite au moyen d'un tapis transporteur dans une aiguilleteuse. La densité des perforations par les aiguilles est de 10 / cm². La profondeur de pénétration des aiguilles est de 12 mm. La vitesse de défilement du tapis est de 20 m / minute.
VI) après l'opération d'aiguilletage léger, l'ébauche de renfort de moulage est introduite dans un four à air traversant comportant une partie chauffante de 12 m de longueur et une vitesse de défilement de 20 m / minute. La température du four à air traversant est d'environ 120°C.
VII) en sortie du four à air traversant, on procède à un calandrage à froid qui donne au renfort de moulage 1 son épaisseur finale qui est voisine de 4 à 5 mm.

Le grammage du renfort de moulage 1 est de 1 200 g/m².

Le grammage peut être compris entre 400 et 1 800 g/m² environ.

### Exemple 2

On réalise un renfort de moulage selon les mêmes étapes que l'exemple 1 ci-dessus, avec la seule différence que, à l'étape III), on dépose sur le premier voile de fibres à surface thermofusible des tronçons de fils de verre de 20 cm de long et de 50 tex, formés chacun de 40 filaments ayant un diamètre unitaire d'environ 15 µm, en même quantité que dans l'exemple 1, pour obtenir un même grammage.

A l'issue de cette étape, on constate que l'épaisseur de la couche de fils de verre est d'environ 10 à 15 cm (avant aiguilletage). Cette épaisseur est à comparer avec l'épaisseur de 3 ou 4 cm que l'on obtient avec un enchevêtrement de tronçons de fils de verre de même diamètre mais de longueur 5cm. Cela démontre l'effet d'élasticité et d'aération conféré par les fils de verre lorsque leur longueur est supérieure à 20 cm environ.

La présente invention n'est pas limitée aux modes de réalisation qui ont été explicitement décrits, mais elle en inclut les diverses variantes et généralisations contenues dans le domaine des revendications ci-après.

## Revendications

1. Renfort de moulage en nappe à base de fibres, comprenant :
- une couche intérieure (2) épaisse et aérée à base de fibres,
- des couches externes (3, 4) disposées de part et d'autre de la couche intérieure (2),
- les couches externes (3, 4) comprenant des tronçons de fibres (3a, 4a) à surface thermofusible,
- certains au moins (3b, 4b) des tronçons (3a, 4a) de fibres à surface thermofusible pénétrant selon une partie de leur longueur dans la couche intérieure (2) et adhérant partiellement entre eux et aux fibres de la couche intérieure (2), **caractérisé en ce que** la couche intérieure (2) comprend des fibres de type fils de verre continus (2a) se développant en orientations aléatoires et en plusieurs épaisseurs.

2. Renfort de moulage selon la revendication 1, **caractérisé en ce que** les fils de verre continus (2a) sont des tronçons de fils ayant une longueur supérieure à 20 cm environ.

3. Renfort de moulage selon la revendication 2, **caractérisé en ce que**, dans la couche intérieure (2), les fils de verre continus (2a) forment un maillage continu selon la surface de la nappe.

4. Renfort de moulage selon la revendication 1, **caractérisé en ce que** les fils de verre continus (2a) sont sous forme d'au moins une mèche (5) éclatée de fils de verre continus de grande longueur.

5. Renfort de moulage selon la revendication 4, **caractérisé en ce que** la mèche (5) de fils de verre continus a un titre de 2 400 à 4 800 tex environ.

6. Renfort de moulage selon l'une quelconque des revendications 1 à 5, **caractérisé en ce que** les fils de verre continus (2a) sont formés d'un assemblage de filaments ayant un diamètre unitaire compris entre environ 14 µm et environ 17 µm.

7. Renfort de moulage selon l'une quelconque des revendications 1 à 6, **caractérisé en ce que** les fils de verre continus (2a) ont un titre unitaire de 40 à 80 tex environ.

8. Renfort de moulage selon l'une quelconque des revendications 1 à 7, **caractérisé en ce qu'**il comprend en outre, entre la couche intérieure (2) et l'une au moins des couches externes (3, 4), une couche intermédiaire (9, 10) à base de fibres de verre coupées.

9. Renfort de moulage selon l'une quelconque des revendications 1 à 8, **caractérisé en ce qu'**il présente un grammage compris entre 400 et 1 800 g/m².

10. Renfort de moulage selon l'une quelconque des revendications 1 à 9, **caractérisé en ce qu'**il est en forme de bande continue conditionnée en bobine.

11. Procédé de fabrication d'un renfort de moulage selon l'une quelconque des revendications 1 à 10, comprenant les étapes de :
a) prévoir un premier voile (3) de fibres chimiques à surface thermofusible,
b) sur le premier voile (3) de fibres chimiques à surface thermofusible, déposer des fils de verre continus, en leur donnant toutes orientations aléatoires et en plusieurs épaisseurs, pour former une couche intérieure (2) de fils de verre continus,
c) déposer, sur la couche intérieure (2) de fils de verre continus, un second voile (4) de fibres chimiques à surface thermofusible,
d) effectuer un aiguilletage léger double face pour faire pénétrer des tronçons (3b, 4b) de fibres à surface thermofusible de chacun des voiles (3, 4) dans la couche intérieure (2),
e) chauffer l'ensemble à une température suffisante pour ramollir et rendre collantes les fibres à surface thermofusible,
f) calandrer à froid l'ensemble.

12. Procédé selon la revendication 11, **caractérisé en ce que**, au cours de J'étape b); on dépose les fils de verre continus sous forme d'une ou plusieurs mèches éclatées de fils de verre continus de grande longueur.

13. Procédé selon la revendication 11, **caractérisé en ce que**, au cours de l'étape b), on dépose les fils de verre continus sous forme de tronçons de fils de verre dont la longueur est supérieure à 20 cm environ.

## Patentansprüche

1. Formteilverstärkung aus einer auf Fasern basierenden Einlage, umfassend:
- eine dicke und mit Luft durchsetzte auf Fasern basierende innere Schicht (2),
- äußere Schichten (3, 4), die an jeder Seite der inneren Schicht (2) angeordnet sind, wobei
- die externen Schichten (3, 4) Abschnitte aus Fasern (3a, 4a) an einer thermoschmelzbaren Oberfläche umfassen,
- wenigstens einige (3b, 4b) der Abschnitte (3a, 4a) aus Fasern an der thermoschmelzbaren Oberfläche über einen Teil ihrer Länge die innere Schicht (2) durchdringen und teilweise aneinander und an den Fasern der internen Schicht (2) anhaften,
**dadurch gekennzeichnet, dass** die innere Schicht (2) Fasern vom Typ (2a) eines kontinuierlichen Glasfaserstranges umfasst, die in zufälligen Orientierungen und mehreren Dicken verlaufen.

2. Formteilverstärkung nach Anspruch 1,
**dadurch gekennzeichnet, dass** die kontinuierlichen Glasfaserstränge (2a) Abschnitte aus Strängen sind, die eine Länge von mehr als etwa 20 cm besitzen.

3. Formteilverstärkung nach Anspruch 2,
**dadurch gekennzeichnet, dass** in der inneren Schicht (2) die kontinuierlichen Glasfaserstränge (2a) eine kontinuierliches Netz entlang der Oberfläche der Einlage bilden.

4. Formteilverstärkung nach Anspruch 1,
**dadurch gekennzeichnet, dass** die kontinuierlichen Glasfaserstränge (2a) in der Form wenigstens einer auseinandergerissenen Strähne (5) eines langen kontinuierlichen Glasfaserstrangs ausgebildet sind.

5. Formteilverstärkung nach Anspruch 4,
**dadurch gekennzeichnet, dass** die Strähne (5) der kontinuierlichen Glasfaserstränge einen Feingehalt von ungefähr 2 400 bis 4 800 tex besitzt.

6. Formteilverstärkung nach einem der Ansprüche 1 bis 5, **dadurch gekennzeichnet, dass** die kontinuierlichen Glasfaserstränge (2a) aus einer Zusammensetzung von Fäden gebildet sind, die einen einheitlichen Durchmesser in einem Bereich von ungefähr 14 µm und ungefähr 17 µm besitzen.

7. Formteilverstärkung nach einem der Ansprüche 1 bis 6, **dadurch gekennzeichnet, dass** die kontinuierlichen Glasfaserstränge (2a) einen einheitlichen Feingehalt in einem Bereich von ungefähr 40 bis 80 tex besitzen.

8. Formteilverstärkung nach einem der Ansprüche 1 bis 7, **dadurch gekennzeichnet, dass** sie zusätzlich zwischen der inneren Schicht (2) und wenigstens einer der äußeren Schichten (3, 4) eine Zwischenschicht (9, 10) basierend auf geschnittenen Glasfasern umfasst.

9. Formteilverstärkung nach einem der Ansprüche 1 bis 8, **dadurch gekennzeichnet, dass** sie ein Flächengewicht aufweist, das zwischen 400 und 1 800 g/m² umfasst.

10. Formteilverstärkung nach einem der Ansprüche 1 bis 9, **dadurch gekennzeichnet, dass** sie in Form eines auf einer Bobine aufgebrachtes kontinuierliches Bandes ausgebildet ist.

11. Verfahren zum Herstellen einer Formteilverstärkung nach einem der Ansprüche 1 bis 10, umfassend die Schritte:
a) Bereitstellen eines ersten Gewebes (3) aus chemischen Fasern mit thermoschmelzbarer Oberfläche,
b) Auflegen auf das erste Gewebe (3) aus chemischen Fasern mit thermoschmelzbarer Oberfläche von kontinuierlichen Glasfasern, alle mit einer zufälligen Orientierung und in mehreren Dicken, um eine innere Schicht (2) aus kontinuierlichen Glasfasern zu bilden,
c) Auflegen auf die innere Schicht (2) aus kontinuierlichen Glasfasern eines zweiten Gewebes (4) aus chemischen Fasern mit thermoschmelzbarer Oberfläche,
d) Anwenden einer leichten, doppelseitigen Vernadelung zum Eindringen lassen von Teilen (3b, 4b) der Fasern mit der thermoschmelzbaren Oberfläche jedes der Gewebe (3, 4) in die innere Schicht (2),
e) Aufheizen des Aufbaus auf eine ausreichende Temperatur, um die Fasern mit der thermoschmelzbaren Oberfläche aufzuweichen und in einen klebrigen Zustand zu überführen,
f) Kaltwalzen des Aufbaus.

12. Verfahren nach Anspruch 11, **dadurch gekennzeichnet, dass** man während des Schrittes b) die kontinuierlichen Glasfaserstränge in Form einer oder mehrerer vergrößerter Strähnen aus kontinuierlichen Glasfasersträngen mit großer Länge einbringt.

13. Verfahren nach Anspruch 11, **dadurch gekennzeichnet, dass** man während des Schrittes b) die kontinuierlichen Glasfasersträngen in Form von Abschnitten von Glasfasern einbringt, deren Länge Länge größer als ungefähr 20 cm ist.

## Claims

1. Molding reinforcement made of a fiber-based lap, comprising:
- a thick and aerated fiber-based internal layer (2),
- external layers (3, 4) positioned on each side of the internal layer (2),
- the external layers (3, 4) comprising portions of fibers (3a, 4a) with hot melt surface,
- at least some (3b, 4b) of the portions (3a, 4a) of fibers with hot melt surface penetrating the internal layer (2) over part of their length and adhering partially to one another and to the fibers of the internal layer (2),
**characterized in that** the internal layer (2) comprises fibers of the continuous glass strand type (2a) which run in random orientations and in several thicknesses.

2. Molding reinforcement as claimed in claim 1, **characterized in that** the continuous glass strands (2a) are portions of strands in excess of around 20 cm in length.

3. Molding reinforcement as claimed in claim 2, **characterized in that**, in the internal layer (2), the continuous glass strands (2a) form a continuous mesh along the surface of the lap.

4. Molding reinforcement as claimed in claim 1, **characterized in that** the continuous glass strands (2a) are in the form of at least one expanded roving (5) of long continuous glass strands.

5. Molding reinforcement as claimed in claim 4, **characterized in that** the roving (5) of continuous glass strands has a count of around 2 400 to 4 800 tex.

6. Molding reinforcement as claimed in one of claims 1 to 5, **characterized in that** the continuous glass strands (2a) are formed of an assembly of filaments of individual diameter ranging between around 14 µm and around 17 µm.

7. Molding reinforcement as claimed in any one of claims 1 to 6, **characterized in that** the continuous glass strands (2a) have an individual count of around 40 to 80 tex.

8. Molding reinforcement as claimed in any one of claims 1 to 7, **characterized in that** it further comprises, between the internal layer (2) and at least one of the external layers (3, 4), an intermediate layer (9, 10) based on chopped glass strands.

9. Molding reinforcement as claimed in any one of claims 1 to 8, **characterized in that** it has a grammage of between 400 and 1 800 g/m².

10. Molding reinforcement as claimed in any one of claims 1 to 9, **characterized in that** it is in the form of a continuous strip packaged in a reel.

11. Method of manufacturing a molding reinforcement as claimed in any one of claims 1 to 10, comprising the steps of:
a) providing a first web (3) of chemical fibers with hot melt surface,
b) laying continuous glass strands on the first web (3) of chemical fibers with hot melt surface, all at random orientations and in several thicknesses, to form an internal layer (2) of continuous glass strands,
c) laying a second web (4) of chemical fibers with hot melt surface on the internal layer (2) of continuous glass strands,
d) performing a double-sided light needling operation to cause portions (3b, 4b) of fibers with hot melt surface in each of the webs (3, 4) to penetrate the internal layer (2),
e) heating the whole assembly to a temperature high enough to soften the fibers with hot melt surface and make them sticky,
f) cold rolling the assembly.

12. Method as claimed in claim 11, **characterized in that**, during step b), the continuous glass strands are laid in the form of one or more expanded rovings of long continuous glass strands.

13. Method as claimed in claim 11, **characterized in that**, during step b), the continuous glass strands are laid in the form of portions of glass strands whose length is greater than about 20 cm.
